# EUROPÄISCHE PATENTSCHRIFT

(11) **EP 0 355 760 B1**
(45) Veröffentlichungstag und Bekanntmachung des Hinweises auf die Patenterteilung: **02.11.1994**
(21) Anmeldenummer: 89115340.5
(22) Anmeldetag: 19.08.1989
(51) Int. Cl.: C08G 12/32

(54) **Kontinuierliche Herstellung von wässrigen Melamin-Formaldehyd-Vorkondensat-Lösungen**
Continuous production of aqueous solutions of melamine-formaldehyde precondensates
Préparation en continu de solutions aqueuses de précondensats de résine mélamine-formaldéhyde

(30) Priorität: 25.08.1988 DE 3828793
(43) Veröffentlichungstag der Anmeldung: 28.02.1990
(73) Patentinhaber: BASF Aktiengesellschaft, 67063 Ludwigshafen (DE)
(72) Erfinder: Berbner, Heinz, D-6942 Moerlenbach (DE); Ebel, Klaus, Dr., D-6704 Mutterstadt (DE); Kuczaty, Michael, D-6900 Heidelberg (DE); Seid, Bernhard, D-6710 Frankenthal (DE); Woerner, Frank Peter, Dr., D-6706 Wachenheim (DE); Zettler, Hans Dieter, D-6718 Gruenstadt (DE)

(56) Entgegenhaltungen:
- DE-A- 2 427 097
- FR-A- 2 068 286
- US-A- 4 458 062
- US-A- 4 497 934

## Beschreibung

Wäßrige Melamin-Formaldehyd-Vorkondensat-Lösungen werden in großen Mengen hergestellt und finden vielseitige Anwendung, vor allem in der Spanplattenherstellung Ein gebräuchliches Verfahren zur Herstellung solcher Lösungen besteht darin, daß man in einem beheizbaren Rührautoklaven die Komponenten zugibt und dann bei erhöhter Temperatur über einen längeren Zeitraum kondensiert. Dieses Verfahren der chargenweisen Herstellung der Produkte hat naturgemäß einige gravierende Nachteile. So ist die Temperaturverteilung in einem Autoklaven nicht optimal, was schließlich zu unterschiedlichen Kondensationsgraden führt. Besonders schwierig ist die Herstellung von hochviskosen Lösungen wie sie bei der Herstellung von Schäumen und Fasern benötigt werden. Bei Viskositäten > 50 Pas ist dieses Verfahren praktisch nicht mehr anwendbar, da aufgrund der starken Klebrigkeit die Wandhaftung so groß wird, daß ein Entleeren des Autoklaven unmöglich wird.

In der US-A-4,458,062 ist ein Verfahren für die Herstellung eines Melamin-Formaldehyd-Harzes durch Reaktion von kristallinem Melamin und festem Formaldehyd in einem "Single pass"-Reaktor beschrieben. Hierbei ist es wesentlich, daß in Abwesenheit von Wasser oder eines sonstigen Lösungsmittels gearbeitet wird. Durch dieses Verfahren werden Melamin-Formaldehyd-Harze erhalten, die wesentlich unterschiedliche Eigenschaften aufweisen als solche, die in Gegenwart von Lösungsmitteln hergestellt wurden.

Aufgabe der vorliegenden Erfindung war es, ein kontinuierliches Verfahren zur Herstellung von Melamin-Formaldehyd-Vorkondensat-Lösungen zu entwickeln, das auch die Herstellung von hoch viskosen Produkten ermöglicht.

Diese Aufgabe konnte durch ein Verfahren zur kontinuierlichen Herstellung von wäßrigen Melamin-Formaldehyd-Vorkondensat-Lösungen gelöst werden, indem man Melamin, Formaldehyd, Wasser und gegebenenfalls Modifizierungsmittel und/oder Zusatzstoffe in einen kontinuierlich arbeitenden Mischer dosiert, die homogene Mischung in einen ein- oder zweiwelligen Extruder leitet, bei Temperaturen von 70 bis 150°C kondensiert, abkühlt und austrägt.

Bei dem erfindungsgemäßen Verfahren geht man im allgemeinen von einem Molverhältnis Melamin:Formaldehyd von 1:2 bis 1:4 aus, vorzugsweise liegt das Verhältnis zwischen 1:2,5 und 1:3,5, Dabei wird das Melamin in fester Form und der Formaldehyd in wäßriger Lösung als beispielsweise 40 oder 50 gew.%ige wäßrige Lösung oder als oligomerer oder polymerer Formaldehyd in fester Form als Paraformaldehyd, Trioxan oder Tetroxan eingesetzt. Im letzten Fall wird Wasser als Lösungsmittel zugesetzt.

Außer den genannten Ausgangskomponenten Melamin und Formaldehyd können noch weitere Modifizierungs- und Zusatzstoffe mitverwendet werden.

Als Modifizierungsmittel kommen beispielsweise Monoalkohole und Diole mit bis zu 6 C-Atomen in Betracht, die zur Etherbildung des methylolierten Melamins führen. Geeignete Monoalkohole sind Methanol und Ethanol. Geeignete Diole sind Ethylenglykol, Diethylenglykol, Triethylenglykol und Propylenglykol.

Weiterhin können Alkalisulfit bzw. Hydrogensulfit wie beispielsweise Natriumdisulfit, Natriumsulfit und Natriumhydrogensulfit mitverwendet werden.

Andere Modifizierungsmittel sind Amine sowie Aminoalkohole wie Ethanolamin und Diethanolamin.

Zur Erzeugung bestimmter Eigenschaften der Kondensatlösungen können weiterhin Dicyandiamid und/oder Hydroxyalkylmelamine als Modifizierungsmittel mitverwendet werden. Besonders geeignete Hydroxyalkylmelamine sind die folgenden Verbindungen:
Mono-(2-hydroxyethyl)melamin,
N,N'-Bis-(2-hydroxyethyl)melamin,
N,N',N''-Tris-(2-hydroxyethyl)melamin,
Mono-(5-hydroxy-3-oxapentyl)melamin,
N,N'-Bis-(5-hydroxy-3-oxapentyl)melamin,
N,N',N''-Tris-(5-hydroxy-3-oxapentyl)melamin.

Sie können entweder als reine Einzelverbindungen oder als Mischungen untereinander jeweils in Substanz, als wäßrige Lösungen oder als Vorkondensate mit Formaldehyd zur Harzmodifizierung eingesetzt werden. Die mit diesen Verbindungen modifizierten Harze ergeben Schäume bzw. Fasern mit verbesserten mechanischen Eigenschaften wie z.B. verbesserter Elastizität und/oder Reißfestigkeit.

Als Zusatzstoffe kommen Katalysatoren, Füllstoffe, Emulgatoren oder Treibmittel in Betracht.

Beispiele für Katalysatoren sind Ameisensäure und Schwefelsäure. Als Füllstoffe kommen beispielsweise faser- oder pulverförmige anorganische Verstärkungsmittel oder Füllstoffe, wie Glasfasern, Metallpulver, Metallsalze oder Silikate, z.B. Kaolin, Talkum, Schwerspat, Quarz oder Kreide, ferner Pigmente und Farbstoffe und Flammschutzmittel in Betracht. Als Emulgatoren kommen die üblichen nichtionogenen, anionenaktiven oder kationaktiven organischen Verbindungen mit langkettigen Alkylresten in Frage. Wird das Vorkondensat beispielsweise zu Schäumen weiterverarbeitet, so können als Treibmittel beispielsweise Pentan mitverwendet werden.

Die Ausgangskomponenten werden einem kontinuierlich arbeitenden Mischer zudosiert, wobei sie homogenisiert werden. Der pH-Wert der Mischung wird mittels wäßriger Alkalilauge auf Werte von 7 bis 14, bevorzugt 8 bis 10, eingestellt. Die homogene Mischung wird in einen ein- oder zweiwelligen Extruder geleitet, wo sie bei Temperaturen von 70 bis 150°C kondensiert werden.

Bei einer anderen Verfahrensvariante werden die Ausgangsverbindungen dem Extruder unmittelbar zudosiert und darin kondensiert.

Die Drehzahlen des Extruders liegen bei 1 bis 100 Umdrehungen pro Minute, wobei Schergeschwindigkeiten im Bereich 0,5 s⁻¹ bis 3000 s⁻¹ auftreten. An die Förder-, Knet- und Scherelemente der Extruderwellen werden keine besonderen Anforderungen gestellt, da die Viskositäten der Lösungen relativ niedrig sind. Die Verweilzeiten der Reaktionsgemische liegen zwischen 5 und 90, bevorzugt zwischen 15 und 35 Minuten.

Ein bevorzugtes Verfahren ist in der Fig. dargestellt und wird im folgenden erläutert.

Kernstück des Verfahrens ist ein selbstreinigender Zweiwellenextruder (1) mit Antriebsmotor (2). Es hat sich als besonders zweckmäßig erwiesen, wenn der Extruder in einzelnen Zonen beheizt bzw. gekühlt werden kann, was mittels der Thermoelemente (TIC) gesteuert wird. Der Extruder wird mit Drehzahlen von 1 bis 100 Umdrehungen/min und Gehäusetemperaturen von 20 bis 150°C betrieben. Dabei hat sich ein Temperaturgradient in Förderrichtung von 20 über 70 bis 150 auf 25°C bewährt.

Die Verweilzeiten der Reaktionsmischung liegen zwischen 5 und 90, bevorzugt 15 bis 35 Minuten.

Die festen Ausgangskomponenten wie Melamin oder Paraformaldehyd werden über ein oder mehrere Differentialdosiersysteme (3) mit Förderschnecke (4) und Wägeeinrichtung (5) entweder direkt über die Leitung (6a) dem Extruder zugeführt, oder, um Extruderlänge zu sparen, über die Leitung (6b) in das speziell kontinuierlich arbeitende Mischgeräte (7) dosiert. Die flüssigen Ausgangskomponenten wie wäßriger Formaldehyd mit gegebenenfalls löslichen Zusatzstoffen werden aus dem gerührten Vorratsbehälter (8) über die Leitung (9) und die Dosierpumpe (10) entweder über die Leitung (9a) dem Extruder (1) direkt oder über die Leitung (9b) dem Mischgerät (7) zugeführt, wo sie mit den festen Ausgangskomponenten gemischt werden und das resultierende Gemisch über die Leitung (11) in den Extruder (1) geleitet werden.

Um Agglomerate zu vermeiden, ist es zweckmäßig, wenn der Mischer (7) außer mit Förderelementen auch mit Scherelementen ausgerüstet ist. Zur Einstellung des pH-Wertes von 8 bis 10, wird eine 50 gew.%ige wäßrige Na- oder K-Lauge kontinuierlich mittels Pumpe (12) zugegeben. Die pH-Wert-Meßstelle befindet sich in der Leitung (11).

Für die Beurteilung der Vorkondensate werden als Kenngrößen die Viskosität, der Trübungspunkt und die Topfzeit herangezogen. Die Messung der Viskosität erfolgt mit einem Kegel-Platte-Viskosimeter bei normalerweise 20°C. Die Vorkondensatlösungen haben Feststoffgehalte von 40 bis 90 Gew.%, bevorzugt 65 bis 85 Gew.%, wobei eine 76 gew.%ige Lösung Viskositäten von 100 bis 600, bevorzugt 250 bis 450 Pas aufweist.

Bei der Messung des Trübungspunktes wird die Wasserlöslichkeit des Harzes überprüft. Es wird 1 Volumenanteil Wasser und 2 Volumenanteile Vorkondensat gemischt, Beim Erhitzen löst sich das Vorkondensat im Wasser bei einer bestimmten Temperatur, die Lösung wird klar. Als Trübungspunkt bezeichnet man die Temperatur, bei der die Lösung beim Abkühlen wieder trüb wird. Der Trübungspunkt ist ein Maß für den Kondensationsgrad. Je höher ein Vorkondensat kondensiert ist, desto höher ist auch der Trübungspunkt. Die Trübungspunkte der Vorkondensatlösungen treten bei 40 bis 90°C, bevorzugt 50 bis 75°C, auf.

Als Topfzeit wird diejenige Zeit bezeichnet, nach der ein Harz nach Einrühren von 2 Gew.% Katalysator z.B. Ameisensäure, noch verarbeitbar ist. Die Vorkondensat-Lösungen weisen Topfzeiten von 0,3 bis 2 Stunden, bevorzugt 0,5 bis 1,5 Stunden auf.

Die Vorkondensat-Lösungen können zur Herstellung von Leimharzen, Schäumen oder Fasern verwendet werden.

### Beispiel 1

In einen mit Rührwerk versehenen Vorratsbehälter (8) wurden 85,7 Gew.% 40 gew.% ige Formaldehydlösung, 6,2 Gew.% Natriumdisulfit, 7,7 Gew.% Paraformaldehyd und 0,4 Gew.% Diethylethanolamin zugesetzt. Nach kurzer Rührzeit war die Lösung verarbeitungsfähig.

Über eine Dosierpumpe (10) wurden 36,8 Gew.% der Lösung in einen kontinuierlich arbeitenden Mischer (7) dosiert. Mittels zweier Dosierwaagen (5) wurden 17,4 Gew.% Paraformaldehyd und 45,8 Gew.% Melamin dem Mischer zugegeben. Gleichzeitig wurde über eine Dosierpumpe (12) soviel Kalilauge zugesetzt, daß sich ein pH-Wert von 8,5 am Auslauf des Mischers einstellt. Die homogene Vormischung wurde in den zweiwelligen Extruder (1) geleitet. Der Extruder ist in Zonen unterteilt, die mit separaten Heizungen versehen sind. Die Eingangstemperatur betrug 107°C, die Temperatur in der Mitte des Extruders betrug 110°C und 112°C, am Ende wurde die Lösung auf 25°C gekühlt. Die Verweilzeit betrug ca. 15 Minuten. Man erhielt am Extruderausgang eine klare, homogene und stippenfreie Lösung mit folgenden Eigenschaften

| Molverhältnis Melamin:Formaldehyd 1:2,75 | |
|---|---|
| Feststoffgehalt | 81 Gew.% |
| Trübungspunkt | 55°C |
| Viskosität (20°C) | 275 Pas |
| Dichte | 1,38 g/l |
| pH-Wert | 9,6 |

### Beispiel 2

Es wurde verfahren wie in Beispiel 1. In den Vorratsbehälter wurden 92,1 Gew.% 50 gew.%iger Formaldehyd, 4,4 Gew.% Dicyandiamid sowie 3,5 Gew.% Natriumdisulfit gegeben. In den kontinuierlich arbeitenden Mischer wurden 58,7 Gew.% dieser Vormischung sowie 41,3 Gew.% Melaminpulver dosiert. Der Extruder wurde wie in Beispiel 1 betrieben. Man erhielt eine klare, homogene und stippenfreie Lösung mit folgenden Daten

| Molverhältnis Melamin:Formaldehyd 1:2,75 | |
|---|---|
| Feststoffgehalt | 64 Gew.% |
| Trübungspunkt | 48°C |
| Viskosität (20°C) | 6 Pas |
| pH-Wert | 9,7 |

Dieses Verfahren erlaubt auch die Verarbeitung von Modifizierungsmittel in weiten Grenzen. So hat sich gezeigt, daß durch Zugabe von Hydroxyethylmelamin die Zähigkeit auf 450 Pas ansteigt. Die Kodensation und Verarbeitbarkeit machen jedoch in der Zweiwellen-Maschine keine Probleme. Wird das Vorkondensat beispielsweise zu Schäumen weiterverarbeitet, so können in dem Extruder auch Emulgatoren und Treibmittel mit eingemischt werden. Erfolgt die Weiterverarbeitung des Vorkondensates zu Fasern mit üblichen Verfahren, so kann kurz vor dem Austritt, im letzten Extrudergehäuse, der Katalysator z.B. Ameisensäure bzw. Schwefelsäure, zugegeben werden.

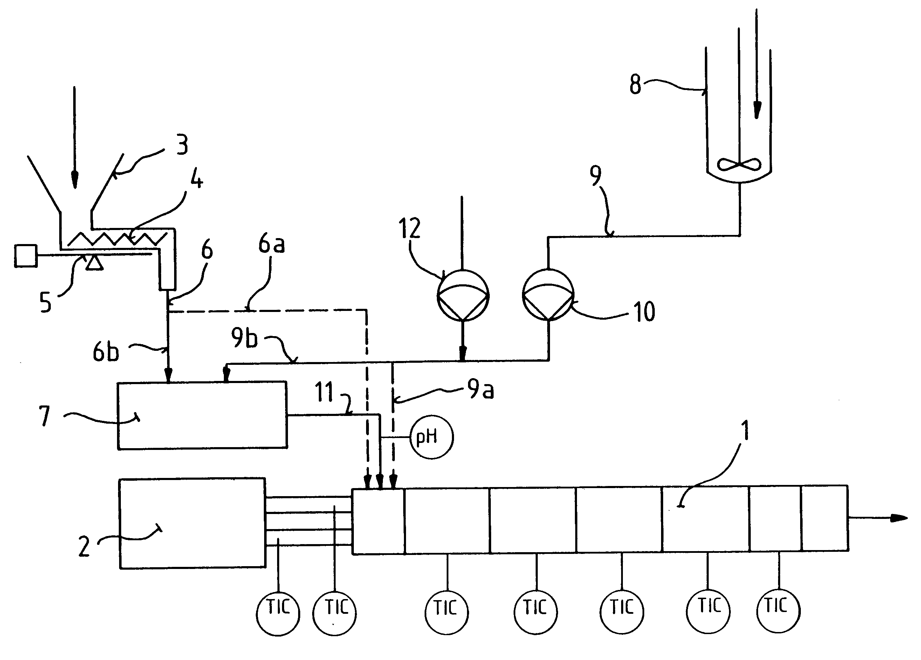

## Patentansprüche

1. Verfahren zur kontinuierlichen Herstellung von wäßrigen Melamin-Formaldehyd-Vorkondensat-Lösungen, dadurch gekennzeichnet, daß man Melamin, Formaldehyd, Wasser in einen kontinuierlich arbeitenden Mischer dosiert, die homogene Mischung in einen ein- oder zweiwelligen Extruder leitet, bei Temperaturen von 70 bis 150°C kondensiert, abkühlt und austrägt.

2. Verfahren nach Anspruch 1, dadurch gekennzeichnet, daß man zusätzlich zu Melamin und Formaldehyd noch weitere in das Vorkondensat einkondensierbare Verbindungen mitverwendet.

3. Verfahren nach Anspruch 2, dadurch gekennzeichnet, daß man zusätzlich zu Melamin und Formaldehyd Mono-(2-hydroxyethyl)melamin oder N,N'-Bis-(2-hydroxyethyl)melamin oder N,N',N''-Tris-(2-hydroxyethyl)-melamin oder ein Gemisch aus zwei oder drei dieser Verbindungen in reiner Form oder in Form eines Vorkondensats mit Formaldehyd einsetzt.

4. Verfahren nach Anspruch 2, dadurch gekennzeichnet, daß man zusätzlich zu Melamin und Formaldehyd Mono-(5-hydroxy-3-oxapentyl)melamin oder N,N'-Bis-(5-hydroxy-3-oxapentyl)melamin oder N,N',N''-Tris-(5-hydroxy-3-oxapentyl)melamin oder ein Gemisch aus zwei oder drei dieser Verbindungen in reiner Form oder in Form eines Vorkondensats mit Formaldehyd einsetzt.

5. Verfahren nach Anspruch 1, dadurch gekennzeichnet, daß man Füllstoffe und sonstige übliche Hilfsmittel mitverwendet.

6. Verfahren nach Anspruch 1, dadurch gekennzeichnet, daß man die einzelnen Komponenten oder das Komponentengemisch in einen zweiwelligen selbstreinigenden Extruder leitet.

7. Verfahren nach Anspruch 1, dadurch gekennzeichnet, daß man mit einem Molverhältnis Melamin zu Formaldehyd von 1:2 bis 1:4 arbeitet.

8. Verfahren nach Anspruch 1, dadurch gekennzeichnet, daß man die Kondensation bei einem pH-Wert von 7 bis 14 durchführt.

9. Verfahren nach Anspruch 1, dadurch gekennzeichnet, daß man das Reaktionsgemisch im Extruder unter Schereinwirkung von 0,5 s⁻¹ bis 3000 s⁻¹ kondensiert.

## Claims

1. A process for the continuous preparation of an aqueous melamine/formaldehyde precondensate solution, wherein melamine, formaldehyde and water are metered into a continuous mixer, and the homogeneous mixture is passed into a single-screw or twin-screw extruder, condensed at from 70 to 150°C, cooled and extruded.

2. A process as claimed in claim 1, wherein further compounds which can be condensed with the precondensate are also present in addition to melamine and formaldehyde.

3. A process as claimed in claim 2, wherein mono-(2-hydroxyethyl)-melamine or N,N'-bis-(2-hydroxyethyl)-melamine or N,N',N''-tris-(2-hydroxyethyl)-melamine or a mixture of two or three of these compounds in pure form or in the form of a precondensate with formaldehyde is used in addition to melamine and formaldehyde.

4. A process as claimed in claim 2, wherein mono-(5-hydroxy-3-oxapentyl)-melamine or N,N'-bis-(5-hydroxy-3-oxapentyl)-melamine or N,N',N''-tris-(5-hydroxy-3-oxapentyl)-melamine or a mixture of two or three of these compounds in pure form or in the form of a precondensate with formaldehyde is used in addition to melamine and formaldehyde.

5. A process as claimed in claim 1, wherein fillers and other conventional assistants are present.

6. A process as claimed in claim 1, wherein the individual components or the mixture of components are or is passed into a twin-screw self-purging extruder.

7. A process as claimed in claim 1, wherein a molar ratio of melamine to formaldehyde of from 1 : 2 to 1 : 4 is used.

8. A process as claimed in claim 1, wherein the condensation is carried out at a pH of from 7 to 14.

9. A process as claimed in claim 1, wherein the reaction mixture is condensed in the extruder at a shear rate of from 0.5 to 3,000 s⁻¹.

## Revendications

1. Procédé de préparation en continu de solutions aqueuses de précondensats de résine mélamine-formaldéhyde, caractérisé en ce que l'on dose de la mélamine, du formaldéhyde, de l'eau, dans un mélangeur travaillant en continu, en ce que l'on introduit le mélange homogène dans une extrudeuse monovis ou à double vis, en ce que l'on condense à des températures comprises entre 70 et 150°C, en ce que l'on refroidit et extrait.

2. Procédé selon la revendication 1, caractérisé en ce que l'on utilise encore, en plus de la mélamine et du formaldéhyde, d'autres composés condensables dans le précondensat.

3. Procédé selon la revendication 2, caractérisé en ce que l'on utilise, en plus de la mélamine et du formaldéhyde, de la mono-(2-hydroxyéthyl)mélamine ou de la N,N'-bis-(2-hydroxyéthyl)mélamine ou de la N,N',N''-tris-(2-hydroxyéthyl)mélamine, ou un mélange de deux ou trois de ces composés sous forme pure ou sous forme d'un précondensat avec du formaldéhyde.

4. Procédé selon la revendication 2, caractérisé en ce que l'on utilise, en plus de la mélamine et du formaldéhyde, de la mono-(5-hydroxy-3-oxapentyl)mélamine ou de la N,N'-bis-(5-hydroxy-3-oxapentyl)mélamine ou de la N,N',N''-tris-(5-hydroxy-3-oxapentyl)mélamine, ou un mélange de deux ou trois de ces composés sous forme pure ou sous forme d'un précondensat avec du formaldéhyde.

5. Procédé selon la revendication 1, caractérisé en ce que l'on utilise conjointement des charges et d'autres auxiliaires usuels.

6. Procédé selon la revendication 1, caractérisé en ce que l'on introduit les composants individuels ou le mélange de composants dans une extrudeuse à double vis autonettoyante.

7. Procédé selon la revendication 1, caractérisé en ce que l'on travaille à un rapport molaire de mélamine au formaldéhyde de 1:2 à 1:4.

8. Procédé selon la revendication 1, caractérisé en ce que l'on effectue la condensation à une valeur du pH comprise entre 7 et 14.

9. Procédé selon la revendication 1, caractérisé en ce que l'on condense le mélange réactionnel dans une extrudeuse sous un cisaillement compris entre 0,5 s⁻¹ et 3000 s⁻¹.
